# EUROPÄISCHE PATENTSCHRIFT

(11) **EP 0 999 390 B1**
(45) Veröffentlichungstag und Bekanntmachung des Hinweises auf die Patenterteilung: **14.04.2004**
(21) Anmeldenummer: 99118356.7
(22) Anmeldetag: 16.09.1999
(51) Int. Cl.: F16K 11/20

(54) **Mehrwegeventil für Flüssigkeiten und dessen Verwendung**
Multiway valve for liquids and its use
Soupape à voies multiples pour liquides et son utilisation

(30) Priorität: 05.11.1998 DE 19850921
(43) Veröffentlichungstag der Anmeldung: 10.05.2000
(73) Patentinhaber: Zimmer Aktiengesellschaft, 60388 Frankfurt am Main (DE)
(72) Erfinder: Finkeldei, Ferdinand, 60388 Frankfurt am Main (DE); Schnaus, Walter, 63517 Rodenbach (DE); Tersi, Paul, 63674 Altenstadt (DE)

(56) Entgegenhaltungen:
- EP-A- 0 615 006
- DD-A- 131 768
- DE-U- 29 805 570
- GB-A- 2 125 942

## Beschreibung

Die Erfindung bezieht sich auf ein Mehrwegeventil für Flüssigkeiten, bestehend aus einer Zuleitung und vom Anschlußgehäuse abzweigenden Ventilkörpern, bei dem jeder Ventilkörper ein als Führungszylinder ausgebildetes Gehäuse mit einer seitlichen, in eine jeweilige Ausgangsleitung mündenden Austrittsöffnung aufweist, in welchem eine in axialer Richtung bewegliche Ventilspindel mit Ventilkopf, der in geschlossener Position des Ventils in einen Ventilsitz eingreift, angeordnet ist sowie auf die Verwendung des Ventils.

Mehrwegeventile für viskose Flüssigkeiten sind bekannt. Die Herstellung und Verarbeitung von Polymerschmelzen oder sonstigen viskosen Flüssigkeiten erfordert in der Regel die Aufteilung des Flüssigkeitsstroms in Teilströme, zum Beispiel, wenn mehrere Verarbeitungspositionen angeschlossen sind und/oder wenn vorübergehend ein Teil des eingesetzten Polymers chemisch modifiziert oder zu andersartigen Produkten verarbeitet werden soll. Die Strömungsaufteilung erfolgt dabei unter Einsatz herkömmlicher Mehrwegeventile, die jedoch häufig in nachteiliger Weise Bereiche aufweisen, in denen die viskose Flüssigkeit mit verringerter Geschwindigkeit fließt. In diesen strömungsarmen Räumen kann es dabei zur vollständigen Unterbrechung der Strömung kommen, so daß die viskose Flüssigkeit teilweise in den Toträumen des Mehrwegeventils verbleibt. Zur Aufrechterhaltung der Fließfähigkeit von Polymerschmelzen sind hohe Temperaturen notwendig, die bei verlängerter Verweilzeit eines Teils des Polymers in den strömungsarmen Räumen zur Zersetzung des Polymers in unlösliche, vernetzte Produkte führen. Auch bei sonstigen viskosen Flüssigkeiten wirkt sich eine partiell verlängerte Verweilzeit meist negativ auf die Qualität aus, da es durch die verlängerte Verweilzeit zur Abscheidung von Zersetzungsprodukten in der viskosen Flüssigkeit kommt, die direkt zu Schädigungen des nachfolgenden Produktes führen.

In der EP-A 0 615 006 wird ein Verteiler für viskose Flüssigkeiten beschrieben, der aus einer Flüssigkeitsleitung und einer Mehrzahl von mit der Leitung verbundenen Ventilen besteht, wobei jedes Ventil ein Gehäuse mit einem als Führungszylinder ausgebildeten Teil, einer in eine Ausgangsleitung mündende Ausgangsöffnung und eine im Führungszylinder zwischen den Positionen geöffnetes und geschlossenes Ventil bewegliche Ventilspindel mit einem Ventilkopf mit pilzförmigem Aufsatz umfaßt. Die einzelnen Ventile weisen nahezu keine strömungsarmen Zonen auf, die Flüssigkeitsleitung muß aber ständig mit Flüssigkeit gespült werden, die rückgeführt werden muß und dadurch zusätzlich belastet wird.

Der Erfindung liegt die Aufgabe zugrunde, ein Mehrwegeventil für Flüssigkeiten zu schaffen, bei dem die Ausbildung von strömungsarmen beziehungsweise strömungstoten Räumen weitgehend vermieden wird und in welchem es somit nicht zu störenden Zersetzungsprozessen kommt. Dies soll auch dann der Fall sein, wenn das Mehrwegeventil mit hochviskosen Flüssigkeiten beaufschlagt wird.

Die der Erfindung zugrundeliegende Aufgabe wird dadurch gelöst, daß
a) die Ventilkörper zwei in gleicher Höhe gegenüberliegende, senkrecht zur Längsachse der Zuleitung (1) angeordnete Basisventilkörper (2, 3) und wahlweise bis zu zwei Zusatz-Ventilkörper (25, 26, 26') sind, wobei die Längsachsen der Basisventilkörper (2, 3) senkrecht zu den Längsachsen der Zusatzventilkörper (25, 26, 26') verlaufen,
b) jeder Ventilkopf (12) der Basisventilkörper (2, 3) in Längsrichtung der jeweiligen Ventilspindel (13) einen Aufsatz in Form eines geraden Kreiszylinders (17) mit aufgesetztem, schief abgeschnittenen, geraden Kreiszylinder (18) trägt, wobei die längste Seitenlinie (19) des schief abgeschnittenen, geraden Kreiszylinders (18) der Zuleitung (1) abgewandt ist,
c) jeder Ventilkopf (12) der Zusatzventilkörper (25, 26, 26'), eine zylindrische Verlängerung (12a) aufweist, deren Frontfläche die Form eines bei geschlossenem Zusatzventil mit der Innenseite des Anschlußgehäuses (9) bündig abschließenden, konkav gekrümmten Zylindermantelteils hat und mittig einen senkrecht zur Längsachse des Zylindermantelteils angeordneten giebeldachförmigen Keil (11) oder einen Konus umfaßt, dessen Grundfläche auf der konkav gekrümmten zylindrischen Frontfläche der Ventilkopfverlängerung (12a) bündig aufliegt,
d) die Zuleitung (1) in Richtung des Austritts (1') der Zuleitung parallel zu den Längsachsen der Ventilspindeln (13) der Basisventilkörper (2, 3) an beiden Seiten (22) abgeflacht ist, und der Strömungsquerschnitt am Austritt (1') der Zuleitung (1) durch zwei gegenüberliegende, nahezu gerade Kanten (7) und durch zwei gegenüberliegende nahezu teilkreisförmig verlaufende Kanten (21) begrenzt ist,
e) zwischen dem Austritt (1') der Zuleitung (1) und den Ventilkörpern (2, 3, 25, 26, 26') ein Strömungskanal (24) angeordnet ist und jeder Aufsatz (17, 18) des Ventilkopfes (12) der jeweiligen Basisventilkörper (2, 3) mit dem aufgesetzten, schief abgeschnittenen geraden Kreiszylinder (18) in geschlossenem Zustand des Basisventils direkt unter dem Strömungskanal (24) positioniert ist,
f) der Durchmesser d bzw. d_{A} des an die Ventilköpfe anschließenden Bereichs (13') der Ventilspindeln (13) 25 bis 90 % des Durchmessers D bzw. D_{A} der Ventilköpfe (12) beträgt, wobei d und D Durchmesser der Basisventile und d_{A} und D_{A} Durchmesser der Zusatzventile sind, und der Übergang vom Durchmesser D bzw. D_{A} auf den Durchmesser d bzw. d_{A} kontinuierlich verläuft, und der Bereich (13') im geöffneten Zustand des jeweiligen Ventils im Bereich dessen Austrittsöffnung (4) positioniert ist,
g) das jeweilige als Führungszylinder ausgebildete Gehäuse (10) auf der der Austrittsöffnung (4) gegenüberliegenden Seite erweitert ist, wobei der Übergang (15) auf den erweiterten Bereich (14) kontinuierlich verläuft.

Eingesetzt wird dieses Mehrwegeventil hauptsächlich für viskose Flüssigkeiten. Diese stehen zum Teil unter einem Druck von 25 bis 250 bar. Der Strömungsquerschnitt der Zuleitung ist in dem dem Austritt der Zuleitung abgewandten, weiter entfernten Teil kreisförmig oder oval. Der gerade Kreiszylinder und der aufgesetzte, schief abgeschnittene, gerade Kreiszylinder des Ventilkopfaufsatzes der Basisventile weisen normalerweise die gleiche Längsachse auf, was jedoch nicht zwingend erforderlich ist. Es ist besonders vorteilhaft, wenn der gerade Kreiszylinder und der aufgesetzte, schief abgeschnittene, gerade Kreiszylinder aus einem Einzelteil bestehen und kantenlos ineinander übergehen. Der Querschnitt der Ventilkopfverlängerung der Zusatzventilkörper ist in vorteilhafter Weise wie der des Ventilkopfes kreisrund ausgebildet; eine leicht ovale Form ist jedoch auch möglich. Wichtig ist, daß die konkav gekrümmte Zylindermantelfläche der Ventilkopfverlängerung mit der Innenwand des Anschlußgehäuses im geschlossenen Zustand des jeweiligen Zusatzventils bündig abschließt. Der von der gekrümmten Fläche der Ventilkopfverlängerung gebildete Hohlraum umfaßt einen giebeldachförmigen Keil, dessen Giebel senkrecht zur Längsachse des konkav gekrümmten Zylindermantelteiles angeordnet ist. Statt eines Keils kann auch ein gerader Konus in dem konkav gekrümmten Hohlraum angeordnet sein. Die Grundfläche des Keils oder des Konus liegt dabei direkt auf der konkav gekrümmten Fläche der Ventilkopfverlängerung oder ist bevorzugt mit dieser direkt verbunden. Die Grundfläche ist folglich nicht flach, sondern der konkaven zylindrischen Krümmung angepaßt. Die Stirnseiten des Keils sind bevorzugt abgerundet. Die nahezu geraden Kanten der Grundfläche des Keils können eine leichte Krümmung aufweisen, so daß diese zusammen mit den zwei gegenüberliegenden nahezu teilkreisförmig verlaufenden Kanten ungefähr die Form einer Null bilden. Unter dem kontinuierlichen Übergang vom Durchmesser D zu dem Durchmesser d bzw. D_{A} zu d_{A} und unter dem kontinuierlichen Übergang auf den erweiterten Bereich ist jeweils ein Übergang zu verstehen, der ohne Ausbildung von Kanten und Stufen erfolgt. Es hat sich gezeigt, daß die Ausbildung von strömungsfreien Toträumen im Mehrwegeventil weitgehendst vermieden wird, wenn die vorgeschlagenen Basisventilkörper und die vorgeschlagenen Zusatzventilkörper in der erfindungsgemäßen Weise angeordnet sind. Das Mehrwegeventil eignet sich im besonderen Maße für hochviskose Flüssigkeiten, wie beispielsweise Polymerschmelzen. Durch die erfindungsgemäße Anordnung des Strömungskanals wird die Ausbildung einer kontinuierlich geführten Strömung im Inneren des Mehrwegeventils begünstigt, so daß ein zusätzlicher Spüleffekt realisiert wird.

Eine bevorzugte Ausgestaltung der Erfindung besteht darin, daß der Strömungskanal zentrisch in Längsrichtung der Zuleitung angeordnet ist und zwei gegenüberliegende Zusatzventilkörper in gleicher Höhe mit den Basisventilkörpern und senkrecht zu diesen sowie jeweils senkrecht zur Längsachse der Zuleitung angeordnet sind. Die zentrische Anordnung des Strömungskanals bei gleichzeitiger Anordnung sämtlicher Ventilkörper in gleicher Höhe senkrecht zur Längsachse der Zuleitung ermöglicht gleiche Strömungsverhältnisse vor den jeweiligen Ventilköpfen jeder Ventilspindel. Dies ist besonders dann von Vorteil, wenn es erforderlich ist, hochviskose Flüssigkeiten in genau gleich große Teilströme aufzuteilen, wie dies beispielsweise bei Polymerschmelzen, die Spinnapparaturen zugeführt werden sollen, der Fall ist.

Gemäß einer weiteren bevorzugten Ausgestaltung der Erfindung ist vorgesehen, daß der Strömungskanal exzentrisch angeordnet ist und lediglich ein Zusatzventilkörper senkrecht zu den Basisventilkörpern entlang der Längsachse der Zuleitung an der dem Strömungskanal gegenüberliegenden Seite des Anschlußgehäuses angeordnet ist. Unter der exzentrischen Anordnung ist eine zur Längsachse der Zuleitung geneigte Anordnung oder eine Anordnung zu verstehen, die bezüglich der Längsachsen parallel versetzt zur Mitte der Zuleitung unter Vermeidung von Kanten und Stufen vorgenommen wird. Die exzentrische Anordnung des Strömungskanals ermöglicht ein tangentiales Einströmen der Flüssigkeiten zu den jeweiligen Basisventilkörpern, was die Vermeidung von strömungsarmen Räumen durch zusätzlichen Spüleffekt begünstigt. Der eine Zusatzventilkörper ist in diesem Fall an der dem Strömungskanal gegenüberliegenden Seite angeordnet, was die Ausbildung einer kontinuierlichen Strömung zu diesem Ventil begünstigt.

Nach einer weiteren bevorzugten Ausgestaltung der Erfindung ist vorgesehen, daß der Strömungskanal exzentrisch angeordnet ist und lediglich ein Zusatzventilkörper in gleicher Höhe mit den Basisventilkörpern senkrecht zur Längsachse der Zuleitung an der dem Strömungskanal abgewandten Seite des Anschlußgehäuses angeordnet ist. Die exzentrische Anordnung des Strömungskanals ermöglicht auch hierbei ein vorteilhaftes tangentiales Einströmen der Flüssigkeit zu allen Ventilkörpern.

Eine weitere bevorzugte Ausgestaltung der Erfindung besteht darin, daß der Winkel α zwischen jeder der beiden Seiten des abgeflachten Teils der Zuleitung und der Längsachse der Zuleitung im Bereich der nahezu geraden Kanten 5 bis 25° beträgt. Auf diese Weise werden die Flüssigkeiten besonders strömungsgünstig dem Strömungskanal zugeführt, was die Einstellung optimaler Strömungsbedingungen im Innern des Mehrwegeventils ermöglicht.

Gemäß einer weiteren Ausgestaltung der Erfindung ist vorgesehen, daß der Strömungskanal einen über seine Länge konstanten Strömungsquerschnitt aufweist und zur Längsachse der Zuleitung geneigt verläuft, wobei der Neigungswinkel β zwischen der Längsachse des geneigten Strömungskanals und der Längsachse der Zuleitung 0,1 bis 45° beträgt. Bei diesem Neigungswinkel β wird das tangentiale Einströmen der Flüssigkeiten zu den Basisventilkörpern verstärkt, was sich vorteilhaft auf die Strömungsverhältnisse im Inneren des Mehrwegeventils auswirkt. Weist der Strömungskanal einen Neigungswinkel β von 1 bis 8° auf, so ist ein tangentiales Einströmen der Flüssigkeiten auch bei unterschiedlichen Größen der Basisventile gewährleistet.

Gemäß einer weiteren Ausgestaltung der Erfindung sind die Ventilkörper seitlich zur Zuleitung leicht versetzt angeordnet, so daß die Längsachsen der Ventilspindeln mit der Längsachse der Zuleitung jeweils keinen Schnittpunkt aufweisen. Auf diese Weise lassen sich die Ventilkörper auch dann relativ einfach fixieren, wenn der Betriebsdruck im Mehrwegeventil unter 25 bar liegt und nur eine relativ geringe Wandstärke des Ventilgehäuses verfügbar ist.

Eine weitere bevorzugte Ausgestaltung der Erfindung besteht darin, daß der Neigungswinkel µ zwischen der längsten Seitenlinie und der Deckfläche des schief abgeschnittenen, geraden Kreiszylinders des Basisventilkopfaufsatzes 30 bis 60° beträgt. Dadurch werden die Strömungsverhältnisse bei geöffnetem Basisventil innerhalb des Ventilgehäuses vergleichmäßigt und bei einem geöffneten und einem geschlossenen Basisventil innerhalb des Anschlußgehäuses begünstigt.

Gemäß einer weiteren bevorzugten Ausgestaltung ist die Länge des Bereichs der Ventilspindeln mit reduziertem Durchmesser d bzw. d_{A} gleich dem 0,3 bis 1,2fachen des Durchmessers der seitlichen Austrittsöffnung des jeweiligen Ventils. Auf diese Weise lassen sich in Verbindung mit dem erweiterten Bereich des Ventilgehäuses gleichförmige Strömungsverhältnisse über den gesamten Querschnitt innerhalb des Gehäuses und der Austrittsöffnung erreichen.

Nach einer weiteren bevorzugten Ausgestaltung der Erfindung ist vorgesehen, daß der erweiterte Durchmesser des als Führungszylinder ausgebildeten Gehäuses das 1,1 bis 2fache des nicht erweiterten Durchmessers des als Führungszylinder ausgebildeten Gehäuses beträgt.

Die Länge des erweiterten Bereichs des als Führungszylinder ausgebildeten Gehäuses beträgt dabei das 1 bis 1,1fache des Durchmessers der Austrittsöffnung des Ventilgehäuses. Diese Maßnahmen unterstützen in vorteilhafter Weise die Vermeidung strömungsverminderter Zonen auf der der Austrittsöffnung der jeweiligen Ventilgehäuse gegenüberliegenden Seite.

Nach einer weiteren bevorzugten Ausgestaltung der Erfindung ist vorgesehen, daß die abgeflachten Teile der Zuleitung an deren Austritt jeweils in Strömungsrichtung eine nach innen gerichtete teilkreisartige Wölbung aufweisen. In diesem Fall hat der Strömungsquerschnitt am Austritt der Zuleitung die Form eines Hundeknochens. Auf diese Weise wird die Strömungsrichtung zu den Ventilköpfen der Basisventilkörpern hin verstärkt, was die Vermeidung von strömungsarmen Räumen ebenfalls begünstigt.

Gemäß einer weiteren bevorzugten Ausgestaltung der Erfindung beträgt die Höhe des giebeldachförmigen Keils oder des Konusses das 0,5 bis 0,9fache der Höhe des Hohlraumes, der durch die konkave Krümmung der Zylindermantelfläche der Ventilkopfverlängerung der Zusatzventilkörper gebildet wird. Diese Maßnahme vermeidet die Bildung von Produktstau in unmittelbarer Nähe der Ventilköpfe in dem jeweiligen durch die Krümmung der Zylindermantel fläche gebildeten Hohlraum.

Nach einer weiteren Ausgestaltung der Erfindung ist die Giebelkante des Keils oder die Spitze des Konusses, die dem Ventilkopf des jeweiligen Zusatz-Ventilkörpers abgewandt ist, abgerundet. Diese Maßnahme verstärkt ebenfalls die Vergleichmäßigung der Strömung.

Nach einer weiteren bevorzugten Ausgestaltung der Erfindung ist vorgesehen, daß der Ventilsitz einen Keilwinkel ϕ von 3 bis 5° aufweist. Dabei läßt sich der Durchsatz der Flüssigkeiten nahezu proportional zum Hub der jeweiligen Ventilspindel einstellen. Dies ist besonders dann von Vorteil, wenn die das Mehrwegeventil verlassenden Flüssigkeiten in genau dosierter Menge weitergeleitet werden müssen.

Gegenstand der Erfindung ist schließlich auch die Verwendung des Mehrwegeventils zur Aufteilung von einer Flüssigkeit, insbesondere einer Polymerschmelze in Teilströme. Bei der Aufteilung einer Polymerschmelze in Teilströme mittels bekannter Mehrwegeventile kommt es in der Regel immer wieder zu Schädigungen des Polymers durch Zersetzungsprodukte, die sich in strömungsarmen Räumen bilden. Diese Schädigungen lassen sich durch die Verwendung des erfindungsgemäßen Mehrwegeventils vermeiden, auch dann, wenn das Mehrwegeventil beheizt ist. Die Beheizung kann durch die Anordnung des Mehrwegeventils in einem Heizbad geschehen, das mit einem flüssigen Heizmedium beaufschlagt ist. Es ist jedoch auch möglich, das flüssige Heizmedium außen am Mehrwegeventil entlang strömen zu lassen, beispielsweise, indem das Mehrwegeventil in einer entsprechenden Rohrleitung für das Heizmedium angeordet wird.

Der Gegenstand der Erfindung wird nachfolgend anhand der Zeichnungen näher und beispielhaft erläutert, wobei
**Fig. 1** das Mehrwegeventil mit den Basisventilkörpern im Schnitt und
**Fig. 1a** den Ventilsitz vergrößert im Schnitt,
**Fig. 2** das Mehrwegeventil mit den Basisventilkörpern gemäß Schnitt C-C nach Fig. 1,
**Fig. 3** das Mehrwegeventil gemäß Schnitt B-B nach Fig. 1 in drei verschiedenen Ausgestaltungen mit geradem und geneigtem Strömungskanal,
**Fig. 4** den Strömungsquerschnitt am Austritt der Zuleitung mit und ohne nach innen gerichteten teilkreisartigen Wölbungen,
**Fig. 5** das als Führungszylinder ausgebildete Ventilkörpergehäuse gemäß Schnitt A-A in Fig. 1,
**Fig. 6** das Mehrwegeventil gemäß Fig. 1 mit dem Ventilkopf eines Zusatz-Ventilkörpers,
**Fig. 7** das Mehrwegeventil gemäß Schnitt D-D in Fig. 6,
**Fig. 8** eine konstruktive Variante des Mehrwegeventils mit zwei Zusatz-Ventilkörpern gemäß Schnitt B-B in Fig. 1 und
**Fig. 9** das Mehrwegeventil gemäß Schnitt E-E in Fig. 8 zeigt.

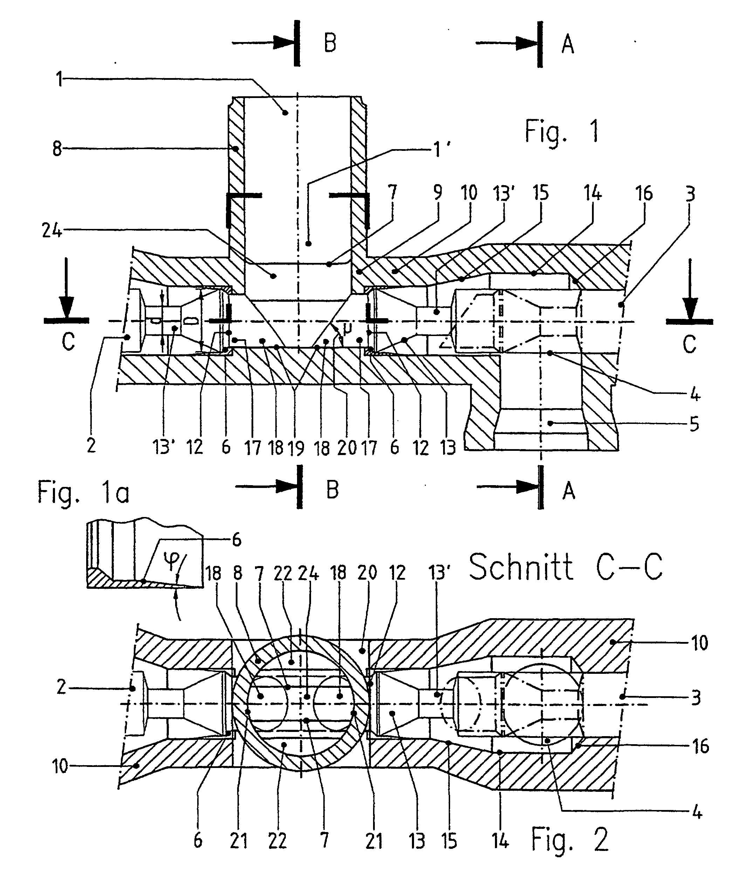

In Fig. 1 ist das erfindungsgemäße Mehrwegeventil mit den Basisventilkörpern (2, 3) im Schnitt dargestellt. Auf die Darstellung von Zusatz-Ventilkörpern wurde hier verzichtet. Die Basisventilkörper (2, 3) sind in gleicher Höhe genau gegenüberliegend senkrecht zur Längsachse der Zuleitung (1) angeordnet. Die Zuleitung (1) mündet mit ihrem Austritt (1') an den nahezu geraden Kanten (7) des darunter angeordneten Strömungskanals (24), der zwischen dem Austritt (1') der Zuleitung (1) und den Eintritt zu den Basisventilkörpern (2, 3) angeordnet ist. Die Wandung (8) der Zuleitung (1) ist direkt mit dem Anschlußgehäuse (9) verbunden. Die Basisventilkörper (2, 3) bestehen jeweils aus einem als Führungszylinder ausgebildeten Ventilgehäuse (10), das in der Regel direkt mit dem Anschlußgehäuse (9) verbunden ist. Es ist jedoch auch möglich, das Anschlußgehäuse (9) und das als Führungszylinder ausgebildete Ventilgehäuse (10) zusammen als Einzelteil zu fertigen, wie hier dargestellt. Die Ventilspindel (13) des einen Basisventilkörpers (3) ist zusätzlich punktgestrichelt im geöffneten Zustand des Mehrwegeventils dargestellt. An jedem Ventilkopf (12) jeder Ventilspindel (13) der Basisventilkörper (2, 3) ist jeweils ein Aufsatz (17, 18) in Form eines geraden Kreiszylinders (17) mit aufgesetztem, schief abgeschnittenen, geraden Kreiszylinder (18) angeordnet, wobei die längste Seitenlinie (19) des schief abgeschnittenen, geraden Kreiszylinders (18) der Zuleitung (1) abgewandt ist. Der Ventilkopfaufsatz (17, 18) ist dabei in vorteilhafter Weise als Einzelteil ausgebildet, bei dem der gerade Kreiszylinder (17) und der aufgesetzte, schief abgeschnittene, gerade Kreiszylinder (18) kantenlos ineinander übergehen. Der Aufsatz (17, 18) des Ventilkopfes (12) des jeweiligen Basisventilkörpers (2, 3) ist mit dem schief abgeschnittenen, geraden Kreiszylinder (18) im geschlossenen Zustand des Basisventils direkt unter dem Strömungskanal (24) auf dem Unterteil (20) des Anschlußgehäuses (9) positioniert. Der Durchmesser d des an den Ventilköpfen (12) anschließenden Bereichs (13') der Ventilspindeln (13) beträgt 25 bis 90 % des Durchmessers D der Ventilköpfe (12), wobei der Übergang vom Durchmesser D auf den Durchmesser d kontinuierlich verläuft, und der Bereich (13') im geöffneten Zustand des Mehrwegeventils im Bereich der Austrittsöffnung (4) des jeweiligen Basisventils, die in eine Ausgangsleitung (5) mündet, positioniert ist. Das als Führungszylinder ausgebildete Gehäuse (10) ist jeweils auf der der Austrittsöffnung (4) gegenüberliegenden Seite erweitert, wobei der Übergang (15) auf den erweiterten Bereich (14) kontinuierlich verläuft. Im Endbereich (16) des Gehäuses (10) wird der erweiterte Bereich (14) wieder eingeschränkt. Durch den schief abgeschnittenen, geraden Kreiszylinder (18) in Verbindung mit dem erweiterten Führungszylinder und dem reduzierten Ventilspindeldurchmesser wird die Strömung im Inneren des jeweiligen Basisventils besonders gleichmäßig, wobei strömungsarme Räume oder Toträume vermieden werden. Besonders vorteilhaft ist, wenn der Neigungswinkel µ zwischen der längsten Seitenlinie und der Deckfläche des schief abgeschnittenen, geraden Kreiszylinders (18) 30 bis 60° beträgt. Dabei ist es nicht zwingend notwendig, daß der gerade Kreiszylinder (17) und der schief abgeschnittene, gerade Kreiszylinder (18) dieselbe Längsachse aufweisen, jedoch dürfen keine Kanten oder Stufen entstehen. Im geschlossenen Zustand des Basisventils greift der Ventilkopf (12) in einen Ventilsitz (6) ein, der in besonders vorteilhafter Weise einen Keilwinkel ϕ von 3 bis 5° aufweisen sollte, wie in Fig. 1a dargestellt.

In Fig. 2 ist das Mehrwegeventil mit den Basisventilkörpern (2, 3) gemäß Schnitt C-C in Fig. 1 dargestellt, wobei auf die Darstellung der Zusatzventilkörper wiederum verzichtet wurde. Die schief abgeschnittenen, geraden Kreiszylinder (18) der Ventilkopfaufsätze sind im geschlossenen Zustand der Basisventile direkt unter dem Strömungskanal (24) positioniert. Die Zuleitung (1) ist in Richtung ihres Austritts (1') parallel zu den Längsachsen der Basisventilkörper (2, 3) an beiden Seiten (22) abgeflacht bei gleichzeitiger allmählicher Verjüngung des Querschnitts. Der Strömungsquerschnitt ist somit am Austritt (1') der Zuleitung (1) durch zwei gegenüberliegende nahezu gerade Kanten (7) und durch zwei gegenüberliegend nahezu teilkreisförmig laufende Kanten (21) begrenzt.

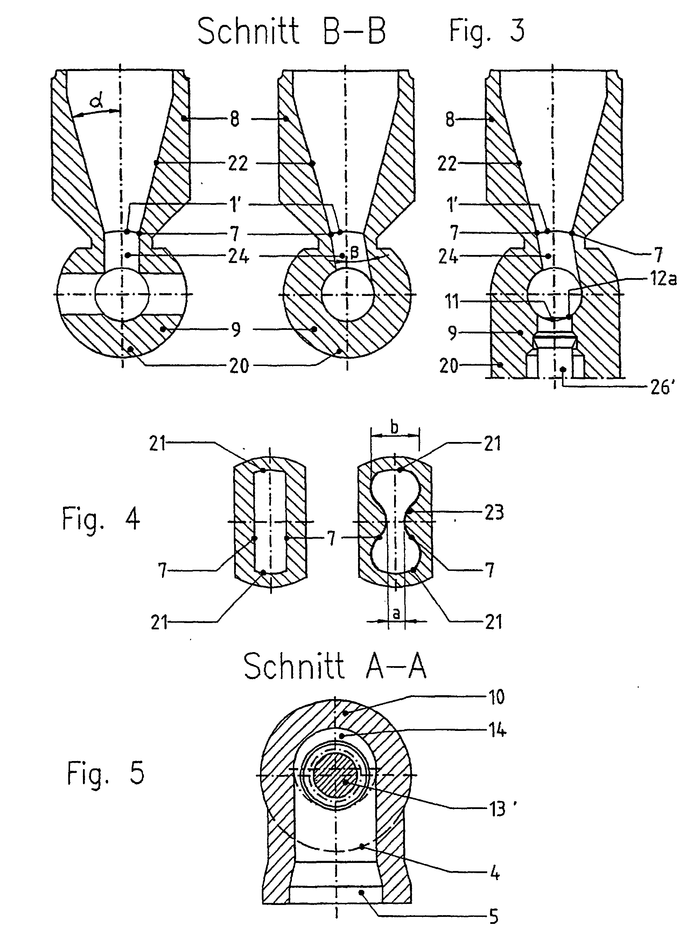

In Fig. 3 ist das Mehrwegeventil in drei Ausgestaltungen gemäß Schnitt B-B in Fig. 1 mit geradem und geneigtem Strömungskanal (24) dargestellt. In der linken Ausgestaltung verläuft der Strömungskanal (24) nicht geneigt zur Längsache der Zuleitung (1). Der Winkel α zwischen jeder der beiden abgeflachten Seiten (22) der Zuleitung (1) und der Längsachse der Zuleitung (1) im Bereich der nahezu geraden Kanten (7) beträgt 5 bis 25°. Der Strömungskanal (24) weist einen über seine Länge konstanten Strömungsquerschnitt auf und verläuft bei der mittigen und rechten Ausgestaltung zur Längsachse der Zuleitung (1) geneigt. Der Neigungswinkel β zwischen der Längsachse des geneigten Strömungskanals (24) und der Längsachse der Zuleitung (1) beträgt dabei 0,1 bis 45°. In bevorzugter Weise wird der Neigungswinkel im Bereich zwischen 1 und 8° eingestellt. Die Flüssigkeiten werden somit in der Weise durch den Strömungskanal (24) geleitet, daß sie tangential zu den Basisventilkörpern hinströmen. Verstärkt werden kann diese tangentiale Einströmung durch eine zusätzliche bezüglich der Längsachsen parallel zur Mitte der Zuleitung (1) leicht versetzte Anordnung des Strömungskanals (24) (nicht dargestellt). Nach der rechten Ausgestaltung ist es vorgesehen, daß lediglich ein Zusatz-Ventilkörper (26') in Richtung der Längsachse der Zuleitung (1) an der der Zuleitung (1) abgewandten Seite des Anschlußgehäuses angeordnet ist. Bei der Darstellung der linken und mittigen Ausgestaltung wurde auf die Darstellung der Ventilkörper (2, 3, 25, 26) gänzlich verzichtet.

In Fig. 4 ist ein Strömungsquerschnitt am Austritt (1') der Zuleitung (1) mit und ohne nach innen gerichteten teilkreisartigen Wölbungen (23) dargestellt. Sofern teilkreisartige Wölbungen (23) vorgesehen sind, hat der Strömungsquerschnitt somit die Form eines Hundeknochens. Das Verhältnis der Abstände a zu b liegt etwa bei 1 : 3. Durch diese Maßnahme wird die Strömung der Flüssigkeiten im Inneren des Mehrwegeventils in Richtung der Basisventilkörper (2, 3) verstärkt (nicht dargestellt), was in vorteilhafter Weise dazu beiträgt, strömungsarme Räume zu vermeiden, beziehungsweise zu minimieren.

In Fig. 5 ist der Schnitt durch ein als Führungszylinder ausgebildetes Ventilgehäuse (10) gemäß Schnitt A-A in Fig. 1 dargestellt. Auf der der Ventilaustrittsöffnung (4) gegenüberliegenden Seite ist das als Führungszylinder ausgebildete Ventilgehäuse (10) erweitert. Der Übergang (15) auf den erweiterten Bereich (14) verläuft dabei kontinuierlich (nicht dargestellt). Die Ventilaustrittsöffnung (4) mündet direkt in die Ausgangsleitung (5).

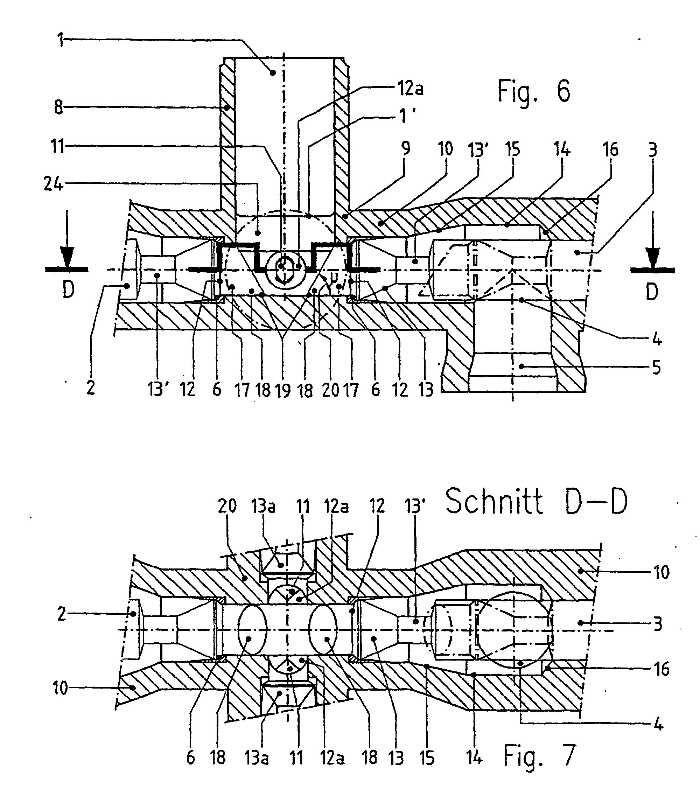

In Fig. 6 ist das Mehrwegeventil gemäß Fig. 1 mit dem Ventilkopf (12a) eines Zusatzventilkörpers dargestellt. Die Ventilkopfverlängerung (12a) hat eine Frontfläche in Form eines konkav gekrümmten Zylindermantelteiles und umfaßt mittig einen senkrecht zur Längsachse des Zylindermantelteiles angeordneten giebeldachförmigen Keil (11), dessen Grundfläche dem Ventilkopf (12a) zugewandt ist und der konkaven Krümmung des Zylindermantelteiles in der Form angepaßt ist.

In Fig. 7 ist das Mehrwegeventil gemäß Schnitt D-D in Fig. 6 dargestellt.

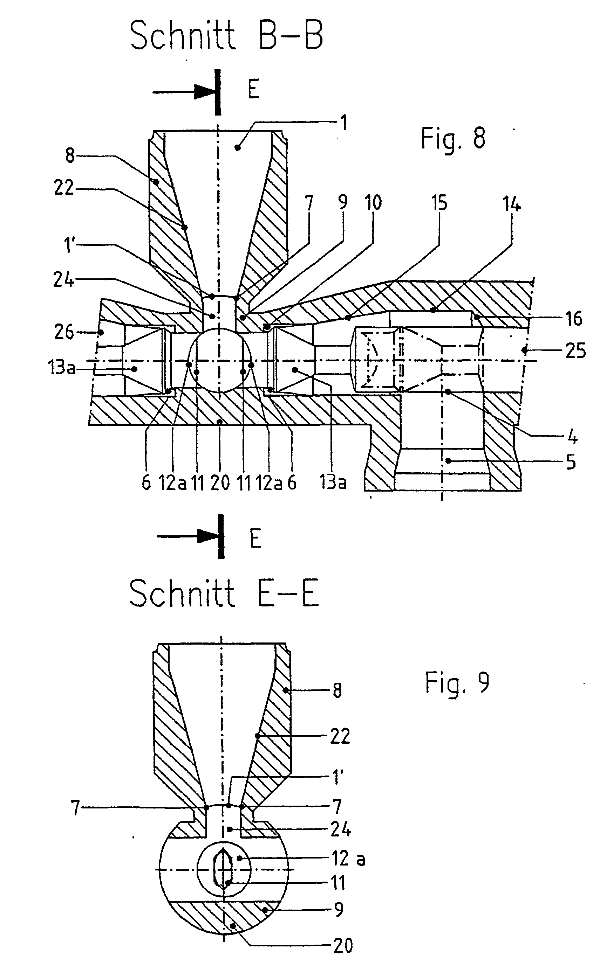

In Fig. 8 ist eine konstruktive Variante des Mehrwegeventils gemäß Schnitt B-B in Fig. 1 dargestellt. Dabei ist vorgesehen, daß der Strömungskanal (24) zentrisch in Längsrichtung der Zuleitung (1) angeordnet ist und zwei gegenüberliegende Zusatz-Ventilkörper (25, 26) in gleicher Höhe mit den Basisventilkörpern (2, 3) (nicht dargestellt) senkrecht zur Längsachse der Zuleitung (1) angeordnet sind. Die Frontfläche der zylindrischen Ventilkopfverlängerung (12a) der Zusatz-Ventilkörper (25, 26) ist in Form eines konkav gekrümmten Zylindermantelteils ausgebildet und umfaßt mittig einen senkrecht zur Längsachse des Zylindermantelteils angeordneten giebeldachförmigen Keil (11). Die Grundfläche des Keils (11) ist dabei dem Ventil zugewandt und liegt direkt an dem konkav gekrümmten Zylindermantelteil an. Keil (11) und Ventilkopfverlängerung (12a) können in vorteilhafter Weise auch als Einzelteil gefertigt sein. Die Höhe des giebeldachförmigen Keils (11) beträgt in vorteilhafter Weise das 0,5 bis 0,9fache der Höhe des durch die Krümmung gebildeten Hohlraumes der Ventilkopfverlängerung (12a).

In Fig. 9 ist das Mehrwegeventil gemäß Schnitt E-E in Fig. 8 dargestellt. Auf die Darstellung der Basisventilkörper (2, 3) wurde verzichtet. Die Ventilkopfverlängerung (12a) ist konkav gekrümmt ausgebildet und hat die Form eines Zylindermantelteiles. Mittig ist senkrecht zur Längsachse des Zylindermantelteiles ein giebeldachförmiger Keil (11) angeordnet, der von der gekrümmten Fläche umfaßt ist. Die gekrümmte Fläche verläuft bei geschlossenem Zusatzventil bündig mit der Innenseite des Anschlußgehäuses (9).

## Patentansprüche

1. Mehrwegeventil für Flüssigkeiten, bestehend aus einer Zuleitung (1) und vom Anschlußgehäuse (9) abzweigenden Ventilkörpern, bei dem jeder Ventilkörper (2, 3, 25, 26, 26') ein als Führungszylinder ausgebildetes Gehäuse (10) mit einer seitlichen, in eine jeweilige Ausgangsleitung (5) mündenden Austrittöffnung (4), und im Führungszylinder eine in axialer Richtung bewegliche Ventilspindel (13, 13a) mit Ventilkopf (12), der in geschlossener Position des Ventils in einen Ventilsitz (6) eingreift, aufweist, **dadurch gekennzeichnet, daß**
a) die Ventilkörper zwei in gleicher Höhe gegenüberliegende, senkrecht zur Längsachse der Zuleitung (1) angeordnete Basisventilkörper (2, 3) und wahlweise bis zu zwei Zusatz-Ventilkörper (25, 26, 26') sind, wobei die Längsachsen der Basisventilkörper (2, 3) senkrecht zu den Längsachsen der Zusatzventilkörper (25, 26, 26') verlaufen,
b) jeder Ventilkopf (12) der Basisventilkörper (2, 3) in Längsrichtung der jeweiligen Ventilspindel (13) einen Aufsatz in Form eines geraden Kreiszylinders (17) mit aufgesetztem, schief abgeschnittenen, geraden Kreiszylinder (18) trägt, wobei die längste Seitenlinie (19) des schief abgeschnittenen, geraden Kreiszylinders (18) der Zuleitung (1) abgewandt ist,
c) jeder Ventilkopf (12) der Zusatzventilkörper (25, 26, 26'), eine zylindrische Verlängerung (12a) aufweist, deren Frontfläche die Form eines bei geschlossenem Zusatzventil mit der Innenseite des Anschlußgehäuses (9) bündig abschließenden, konkav gekrümmten Zylindermantelteils hat und mittig einen senkrecht zur Längsachse des Zylindermantelteils angeordneten giebeldachförmigen Keil (11) oder einen Konus umfaßt, dessen Grundfläche auf der konkav gekrümmten zylindrischen Frontfläche der Ventilkopfverlängerung (12a) bündig aufliegt,
d) die Zuleitung (1) in Richtung des Austritts (1') der Zuleitung parallel zu den Längsachsen der Ventilspindeln (13) der Basisventilkörper (2, 3) an beiden Seiten (22) abgeflacht ist, und der Strömungsquerschnitt am Austritt (1') der Zuleitung (1) durch zwei gegenüberliegende, nahezu gerade Kanten (7) und durch zwei gegenüberliegende nahezu teilkreisförmig verlaufende Kanten (21) begrenzt ist,
e) zwischen dem Austritt (1') der Zuleitung (1) und den Ventilkörpern (2, 3, 25, 26, 26') ein Strömungskanal (24) angeordnet ist und jeder Aufsatz (17, 18) des Ventilkopfes (12) der jeweiligen Basisventilkörper (2, 3) mit dem aufgesetzten, schief abgeschnittenen geraden Kreiszylinder (18) in geschlossenem Zustand des Basisventils direkt unter dem Strömungskanal (24) positioniert ist,
f) der Durchmesser d bzw. d_{A} des an die Ventilköpfe anschließenden Bereichs (13') der Ventilspindeln (13) 25 bis 90 % des Durchmessers D bzw. D_{A} der Ventilköpfe (12) beträgt, wobei d und D Durchmesser der Basisventile und d_{A} und D_{A} Durchmesser der Zusatzventile sind, und der Übergang vom Durchmesser D bzw. D_{A} auf den Durchmesser d bzw. d_{A} kontinuierlich verläuft, und der Bereich (13') im geöffneten Zustand des jeweiligen Ventils im Bereich dessen Austrittsöffnung (4) positioniert ist,
g) das jeweilige als Führungszylinder ausgebildete Gehäuse (10) auf der der Austrittsöffnung (4) gegenüberliegenden Seite erweitert ist, wobei der Übergang (15) auf den erweiterten Bereich (14) kontinuierlich verläuft.

2. Mehrwegeventil nach Anspruch 1, **dadurch gekennzeichnet, daß** der Strömungskanal (24) zentrisch in Längsrichtung der Zuleitung (1) angeordnet ist und zwei gegenüberliegende Zusatzventilkörper (25, 26) in gleicher Höhe mit den Basisventilkörpern (2, 3) senkrecht zur Längsachse der Zuleitung (1) angeordnet sind.

3. Mehrwegeventil nach Anspruch 1, **dadurch gekennzeichnet, daß** der Strömungskanal (24) exzentrisch angeordnet ist und lediglich ein Zusatzventilkörper (25 oder 26) in gleicher Höhe mit den Basisventilkörpern (2, 3) senkrecht zur Längsachse der Zuleitung (1) an der vom Strömungskanal (24) abgewandten Seite angeordnet ist.

4. Mehrwegeventil nach Anspruch 1, **dadurch gekennzeichnet, daß** der Strömungskanal (24) exzentrisch angeordnet ist und lediglich ein Zusatzventilkörper (26') in Richtung der Längsachse der Zuleitung (1) an der der Zuleitung (1) abgewandten Seite des Anschlußgehäuses (9) angeordnet ist.

5. Mehrwegeventil nach einem der Ansprüche 1 bis 4, **dadurch gekennzeichnet, daß** der Winkel α zwischen jeder der beiden Seiten (22) der abgeflachten Zuleitung (1) und der Längsachse der Zuleitung (1) im Bereich der nahezu geraden Kanten (7) 5 bis 25° beträgt.

6. Mehrwegeventil nach Anspruch 3 oder Anspruch 4, **dadurch gekennzeichnet, daß** der Strömungskanal (24) einen über seine Länge konstanten Strömungsquerschnitt aufweist und zur Längsachse der Zuleitung (1) geneigt verläuft, wobei der Neigungswinkel β zwischen der Längsachse des geneigten Strömungskanals (24) und der Längsachse der Zuleitung (1) 0,1 bis 45° beträgt.

7. Mehrwegeventil nach Anspruch 6, **dadurch gekennzeichnet, daß** der Neigungswinkel β 1 bis 8° beträgt.

8. Mehrwegeventil nach Anspruch 2, **dadurch gekennzeichnet, daß** die Ventilkörper (2, 3, 25, 26) seitlich zur Zuleitung (1) versetzt angeordnet sind, so daß die Längsachsen der Ventilspindeln (13, 13 a) mit der Längsachse der Zuleitung (1) jeweils keinen Schnittpunkt aufweisen.

9. Mehrwegeventil nach einem der Ansprüche 1 bis 8, **dadurch gekennzeichnet, daß** der Neigungswinkel µ zwischen der längsten Seitenlinie (19) und der Deckfläche des schief abgeschnittenen, geraden Kreiszylinders (18) 30 bis 60° beträgt.

10. Mehrwegeventil nach einem der Ansprüche 1 bis 9, **dadurch gekennzeichnet, daß** die Länge des Bereichs (13') der Ventilspindeln mit reduziertem Durchmesser d oder d_{A} gleich dem 0,3 bis 1,2fachen des Durchmessers der seitlichen Austrittsöffnung des jeweiligen Ventils ist.

11. Mehrwegeventil nach einem der Ansprüche 1 bis 10, **dadurch gekennzeichnet, daß** der Durchmesser des erweiterten Bereiches (14) des als Führungszylinder ausgebildeten Gehäuses (10) das 1,1 bis 2fache des nicht erweiterten Durchmessers des als Führungszylinder ausgebildeten Gehäuses (10) beträgt.

12. Mehrwegeventil nach einem der Ansprüche 1 bis 11, **dadurch gekennzeichnet, daß** die Länge des erweiterten Bereiches (14) des als Führungszylinder ausgebildeten Gehäuses (10) das 1 bis 1,1fache des Durchmessers der Austrittsöffnung (4) des jeweiligen Ventils beträgt.

13. Mehrwegeventil nach einem der Ansprüche 1 bis 12, **dadurch gekennzeichnet, daß** die nahezu geraden Kanten (7) am Austritt (1') der Zuleitung (1) mittig jeweils eine nach innen gerichtete teilkreisartige Wölbung (23) aufweisen.

14. Mehrwegeventil nach einem der Ansprüche 1 bis 13, **dadurch gekennzeichnet, daß** die Höhe des giebelförmigen Keils (11) oder des Konusses das 0,5 bis 0,9fache der Höhe des Hohlraumes, der durch die konkave Krümmung der Zylindermantelfläche der Ventilkopfverlängerung (12a) der Zusatzventilkörper (25, 26, 26') gebildet wird, beträgt.

15. Mehrwegeventil nach einem der Ansprüche 1 bis 14, **dadurch gekennzeichnet, daß** die Frontflächen des giebeldachförmigen Keils (11) abgerundet sind.

16. Mehrwegeventil nach einem der Ansprüche 1 bis 15, **dadurch gekennzeichnet, daß** der Ventilsitz (6) einen Keilwinkel ϕ von 3 bis 5° aufweist.

17. Verwendung des Mehrwegeventils nach einem der Ansprüche 1 bis 16 zur Aufteilung von einer Polymerschmelze in Teilströme.

## Claims

1. A multiway valve for liquids, consisting of an inlet line (1) and valve bodies which branch off from the connector housing (9), in which each valve body (2, 3, 25, 26, 26') has a housing (10) formed as a guide cylinder with a lateral exit opening (4) which opens into a respective outlet line (5), and in the guide cylinder a valve spindle (13, 13a) movable in the axial direction with a valve head (12), which when the valve is closed engages in a valve seat (6), **characterised in that**
a) the valve bodies are two basic valve bodies (2, 3) located opposite one another at the same height and arranged perpendicular to the longitudinal axis of the inlet line (1) and, optionally, up to two additional valve bodies (25, 26, 26'), the longitudinal axes of the basic valve bodies (2, 3) extending perpendicular to the longitudinal axes of the additional valve bodies (25, 26, 26'),
b) each valve head (12) of the basic valve body (2, 3) in the longitudinal direction of the respective valve spindle (13) bears an attachment in the form of a straight cylinder (17) with an attached straight cylinder (18) which is cropped at an inclined angle, the longest side (19) of the straight cylinder (18) which is cropped at an inclined angle being remote from the inlet line (1),
c) each valve head (12) of the additional valve bodies (25, 26, 26') has a cylindrical extension (12a), the front surface of which is in the form of a concave outer cylinder part which closes off flush with the inside of the connector housing (9) when the additional valve is closed and centrally a gable-roof-shaped wedge (11) arranged perpendicular to the longitudinal axis of the outer cylinder part or a cone, the base surface of which lies flush on the concave cylindrical front surface of the valve head extension (12a),
d) the inlet line (1) in the direction of the outlet (1') of the inlet line is flattened off on both sides (22) parallel to the longitudinal axes of the valve spindles (13) of the basic valve bodies (2, 3), and the flow cross-section at the outlet (1') of the inlet line (1) is defined by two opposing, virtually straight edges (7) and by two opposing edges (21) extending virtually in an arc-shape,
e) a flow channel (24) is arranged between the outlet (1') of the inlet line (1) and the valve bodies (2, 3, 25, 26, 26') and each attachment (17, 18) of the valve head (12) of the respective basic valve bodies (2, 3) with the attached straight cylinder (18) which is cropped at an inclined angle in the closed state of the basic valve is positioned directly beneath the flow channel (24),
f) the diameter d or d_{A} of the region (13') of the valve spindles (13) which adjoins the valve heads is 25 to 90% of the diameter D or D_{A} of the valve heads (12), d and D being the diameters of the basic valves and d_{A} and D_{A} being the diameters of the additional valves, and the transition from the diameter D or D_{A} to the diameters d or d_{A} respectively being continuous, and the region (13') in the opened state of the respective valve being positioned in the region of its exit opening (4),
g) the respective housing (10) formed as a guide cylinder is widened on the side opposite the exit opening (4), the transition (15) to the widened region (14) being a continuous one.

2. A multiway valve according to claim 1, **characterised in that** the flow channel (24) is arranged centrally in the longitudinal direction of the inlet line (1) and two opposing additional valve bodies (25, 26) are arranged at the same height as the basic valve bodies (2, 3) perpendicular to the longitudinal axis of the inlet line (1).

3. A multiway valve according to claim 1, **characterised in that** the flow channel (24) is arranged eccentrically and only one additional valve body (25 or 26) is arranged at the same height as the basic valve bodies (2, 3) perpendicular to the longitudinal axis of the inlet line (1) on the side remote from the flow channel (24).

4. A multiway valve according to claim 1, **characterised in that** the flow channel (24) is arranged eccentrically and only one additional valve body (26') is arranged in the direction of the longitudinal axis of the inlet line (1) on the side of the connector housing (9) remote from the inlet line (1).

5. A multiway valve according to one of claims 1 to 4, **characterised in that** the angle α between each of the two sides (22) of the flattened inlet line (1) and the longitudinal axis of the inlet line (1) in the region of the virtually straight edges (7) is 5 to 25°.

6. A multiway valve according to claim 3 or claim 4, **characterised in that** the flow channel (24) has a constant flow cross-section over its length and is inclined relative to the longitudinal axis of the inlet line (1), the angle of inclination β between the longitudinal axis of the inclined flow channel (24) and the longitudinal axis of the inlet line (1) being 0.1 to 45°.

7. A multiway valve according to claim 6, **characterised in that** the angle of inclination β is 1 to 8°.

8. A multiway valve according to claim 2, **characterised in that** the valve bodies (2, 3, 25, 26) are laterally offset with respect to the inlet line (1) such that the longitudinal axes of the valve spindles (13, 13a) do not intersect the longitudinal axis of the inlet line (1).

9. A multiway valve according to one of claims 1 to 8, **characterised in that** the angle of inclination µ between the longest side (19) and the top face of the straight cylinder (18) which is cropped at an inclined angle is 30 to 60°.

10. A multiway valve according to one of claims 1 to 9, **characterised in that** the length of the region (13') of the valve spindles with reduced diameter d or d_{A} is 0.3 to 1.2 times the diameter of the lateral exit opening of the respective valve.

11. A multiway valve according to one of claims 1 to 10, **characterised in that** the diameter of the widened region (14) of the housing (10) formed as a guide cylinder is 1.1 to 2 times the unwidened diameter of the housing (10) formed as a guide cylinder.

12. A multiway valve according to one of claims 1 to 11, **characterised in that** the length of the widened region (14) of the housing (10) formed as a guide cylinder is 1 to 1.1 times the diameter of the exit opening (4) of the respective valve.

13. A multiway valve according to one of claims 1 to 12, **characterised in that** the virtually straight edges (7) at the outlet (1') of the inlet line (1') each have in the centre an arc-shaped protrusion (23), facing inward.

14. A multiway valve according to one of claims 1 to 13, **characterised in that** the height of the gable-roof-shaped wedge (11) or of the cone is 0.5 to 0.9 times the height of the cavity formed by the concave curvature of the outer cylinder surface of the valve head extension (12a) of the additional valve bodies (25, 26, 26').

15. A multiway valve according to one of claims 1 to 14, **characterised in that** the front surfaces of the gable-roof-shaped wedge (11) are rounded.

16. A multiway valve according to one of claims 1 to 15, **characterised in that** the valve seat (6) has a wedge angle ϕ of 3 to 5°.

17. The use of the multiway valve according to one of claims 1 to 16 for dividing a polymer melt into partial streams.

## Revendications

1. Soupape à voies multiples pour des liquides, constituée d'un conduit (1) d'entrée et de corps de soupape en dérivation d'un boîtier (9) de raccordement, dans laquelle chaque corps (2, 3, 25, 26, 26') de soupape a un boîtier (10) constitué en cylindre de guidage et ayant une ouverture (4) latérale de sortie débouchant dans un conduit (5) respectif de sortie, et dans le cylindre de guidage, une broche (13, 13a) de soupape mobile en direction axiale et ayant une tête (12) de soupape qui, en position fermée de la soupape, pénètre dans un siège (6) de soupape, **caractérisée en ce que**
a) les corps de soupape sont deux corps (2, 3) de base de soupape se faisant face au même niveau et disposés perpendiculairement à l'axe longitudinal du conduit (1) d'entrée et éventuellement jusqu'à deux corps (25, 26, 26') supplémentaires de soupape, les axes longitudinaux des corps (2, 3) de base de soupape s'étendant perpendiculairement aux axes longitudinaux des corps (25, 26, 26') supplémentaires de soupape,
b) chaque tête (12) de soupape des corps (2, 3) de base de soupape porte, dans la direction longitudinale de la broche (13) respective de soupape, une coiffe sous la forme d'un cylindre (17) droit de section circulaire sur lequel est posé un cylindre (18) droit de section circulaire coupé en biais, la droite (19) latérale la plus longue du cylindre (18) droit de section circulaire coupé en biais étant éloignée du conduit (1) d'entrée,
c) chaque tête (12) de soupape des corps (25, 26, 26') supplémentaires de soupape a un prolongement (12a) cylindrique dont la surface frontale a la forme d'une partie latérale de cylindre concave à affleurement lorsque la soupape supplémentaire est fermée avec le côté intérieur du boîtier (9) de raccordement et comprend au milieu un coin (11) en forme de comble à pignon ou un cône dirigé perpendiculairement à l'axe longitudinal de la partie de surface latérale cylindrique, dont la surface de base s'applique à affleurement sur la surface frontale cylindrique concave du prolongement (12a) de corps de soupape,
d) le conduit (1) d'entrée est aplati des deux côtés (22)en direction de la sortie (1') du conduit d'entrée parallèlement aux axes longitudinaux des broches (13) de soupape, des corps (2, 3) de base de soupape, et la section transversale d'écoulement à la sortie (1') du conduit (1) d'entrée est délimitée par deux bords (7) opposés presque droits et par deux bords (21) opposés s'étendant presque en forme d'arc de cercle,
e) entre la sortie (1') du conduit (1) d'entrée et les corps (2, 3, 25, 26, 26') de soupape est disposé un canal (24) d'écoulement et chaque coiffe (17, 18) de la tête (12) de soupape des corps (2, 3) respectifs de base de soupape est placée en ayant le cylindre (18) droit de section circulaire coupé en biais, lorsque la soupape de base est à l'état fermé, directement sous le canal (24) d'écoulement,
f) le diamètre d ou d_{A} de la partie (13'), se raccordant aux têtes de soupape, des broches (13) de soupape représente de 25 à 90 % du diamètre D ou D_{A} des têtes (12) de soupape, d et D étant les diamètres des soupapes de base et d_{A} et D_{A} les diamètres des soupapes supplémentaires, et le passage du diamètre D ou D_{A} au diamètre d ou d_{A} s'effectuant d'une manière continue et la partie (13') étant placée, lorsque la soupape respective est à l'état ouvert, dans la partie de son ouverture (4) de sortie,
g) le boîtier (10) respectif constitué en cylindre de guidage est élargi du côté opposé à l'ouverture (4) de sortie, le passage (15) s'étendant d'une manière continue sur la partie (14) élargie.

2. Soupape à voies multiples suivant la revendication 1, **caractérisée en ce que** le canal (24) d'écoulement est disposé de manière centrée dans la direction longitudinale du conduit (1) d'entrée et deux corps (25, 26) supplémentaires de soupape sont disposés au même niveau que les corps (2, 3) de base de soupape perpendiculairement à l'axe longitudinal du conduit (1) d'entrée.

3. Soupape à voies multiples suivant la revendication 1, **caractérisée en ce que** le canal (24) d'écoulement est disposé de manière excentrée et seul un corps (25 ou 26) supplémentaire de soupape est disposé au même niveau que les corps (2, 3) de base de soupape perpendiculairement à l'axe longitudinal du conduit (1) d'entrée du côté éloigné du canal (24) d'écoulement.

4. Soupape à voies multiples suivant la revendication 1, **caractérisée en ce que** le canal (24) d'écoulement est disposé de manière excentrée et seul un corps (26') supplémentaire de soupape est disposé dans la direction de l'axe longitudinal du conduit (1) d'entrée du côté du boîtier (9) de raccordement éloigné du conduit (1) d'entrée.

5. Soupape à voies multiples suivant l'une des revendications 1 à 4, **caractérisée en ce que** l'angle α entre chacun des deux côtés du conduit (1) d'entrée aplati et l'axe longitudinal du conduit (1) d'entrée est dans la partie des bords (7) presque droits de 5 à 25°.

6. Soupape à voies multiples suivant la revendication 3 ou 4, **caractérisée en ce que** le canal (24) d'écoulement a une section transversale d'écoulement à peu près constante sur sa longueur et est incliné vers l'axe longitudinal du conduit (1 ) d'entrée, l'angle β d'inclinaison entre l'axe longitudinal du canal (24) d'écoulement incliné et l'axe longitudinal du conduit (1) d'entrée étant compris entre 0,1 et 45°.

7. Soupape à voies multiples suivant la revendication 6, **caractérisée en ce que** l'angle β d'inclinaison est compris entre 1 et 8°.

8. Soupape à voies multiples suivant la revendication 2, **caractérisée en ce que** les corps (2, 3, 25, 26) de soupape sont décalés latéralement par rapport au conduit (1) d'entrée de sorte que les axes longitudinaux des broches (13, 13a) de soupape n'ont pas de point d'intersection avec l'axe longitudinal du conduit (1) d'entrée.

9. Soupape à voies multiples suivant l'une des revendications 1 à 8, **caractérisée en ce que** l'angle µ d'inclinaison entre la droite (19) latérale la plus longue et la surface de sommet du cylindre (18) droit de section circulaire coupé en biais est compris entre 30 et 60°.

10. Soupape à voie multiples suivant l'une des revendications 1 à 9, **caractérisée en ce que** la longueur de la partie (13') des broches de soupape de diamètre d ou d_{A} réduit est égale à 0,3 à 1,2 fois le diamètre de l'ouverture latérale de sortie de la soupape respective.

11. Soupape à voies multiples suivant l'une des revendications 1 à 10, **caractérisée en ce que** le diamètre de la partie (14) élargie du boîtier (10) constitué en cylindre de guidage représente de 1,1 à 2 fois le diamètre non élargi du boîtier (10) constitué en cylindre de guidage.

12. Soupape à voies multiples suivant l'une des revendications 1 à 11, **caractérisée en ce que** la longueur de la partie (14) élargie du boîtier (10) constitué en cylindre de guidage représente de 1 à 1,1 fois le diamètre de l'ouverture (4) de sortie de la soupape respective.

13. Soupape à voies multiples suivant l'une des revendications 1 à 12, **caractérisée en ce que** les bords (7) à peu près droit ont à la sortie (1') du conduit (1) d'entrée au milieu, respectivement, une courbure (23) à la manière d'un arc de cercle dirigée vers l'intérieur.

14. Soupape à voies multiples suivant l'une des revendications 1 à 13, **caractérisée en ce que** la hauteur du coin (11) en forme de comble à pignon ou du cône représente de 0,5 à 0,9 fois la hauteur de la cavité qui est formée par la courbure concave de la surface latérale cylindrique du prolongement (12a) de la tête de soupape des corps (25, 26, 26') supplémentaires de soupape.

15. Soupape à voies multiples suivant l'une des revendications 1 à 14, **caractérisée en ce que** les surfaces frontales du coin (11) en forme de comble à pignon sont arrondies.

16. Soupape à voies multiples suivant l'une des revendications 1 à 15, **caractérisée en ce que** le siège (6) de soupape a un angle ϕ de coin de 3 à 5°.

17. Utilisation de la soupape à voies multiples suivant l'une des revendications 1 à 16 pour répartir du polymère fondu en des courants partiels.
